# EUROPEAN PATENT APPLICATION

(11) **EP 4 830 943 A1**
(43) Date of publication of application: **28.10.2026**
(21) Application number: 24910844.0
(22) Date of filing: 17.12.2024
(51) Int. Cl.: B60B 35/12, B60K 7/00, B60T 1/06

(54) **DRIVE AXLE ASSEMBLY AND VEHICLE**

(30) Priority: 29.12.2023 CN 202311862888
(71) Applicant: BYD Company Limited, Shenzhen, Guangdong 518118 (CN)
(72) Inventor: HAN, Jifeng, Shenzhen, Guangdong 518118 (CN)
(74) Representative: Taor, Simon Edward William
(86) International application number: PCT/CN2024/140007
(87) International publication number: WO 2025/139913

(57) **Abstract**

A drive axle assembly and a vehicle comprising same. The drive axle assembly comprises a hub mechanism, a driving mechanism and a braking mechanism. The hub mechanism is connected to the driving mechanism. The braking mechanism is movably connected to the driving mechanism, and the braking mechanism is used for braking the driving mechanism to achieve braking of the hub mechanism.

## Description

### CROSS-REFERENCE TO RELATED APPLICATIONS

The present disclosure claims priority to Chinese Patent Application No. 202311862888.5, filed with the China National Intellectual Property Administration (CNIPA) on December 29, 2023, entitled " DRIVE AXLE ASSEMBLY AND VEHICLE ", which is incorporated herein by reference in its entirety.

### FIELD

This application pertains to the technical field of vehicle engineering and specifically relates to a drive axle assembly and a vehicle.

### BACKGROUND

The drive axle assembly serves to supply a stable and reliable power source for the vehicle and plays a critical role.

In the prior art, a drive axle assembly generally comprises a brake, a drive unit, and a hub. The hub is connected to the drive unit and incorporates a planetary gear structure. The brake is connected to the planetary gear structure and decelerates and brakes the hub via the planetary gear structure.

However, during research into the prior art, the inventor has found that when the brake decelerates and brakes the hub through the planetary gear structure, the gear ratio of the planetary gear structure is relatively small. To achieve a satisfactory braking effect on the hub, multiple friction pairs must be installed in the drive unit to counteract the hub torque. This reduces the available installation space for the drive shaft within the drive unit and limits the output power of the drive axle assembly.

### SUMMARY

In view of the above problems, the present application proposes a drive axle assembly and a vehicle that overcome the above problems or at least partially address the above problems.

To solve the above technical problems, the present application is implemented as follows:

In a first aspect, embodiments of the present application propose a drive axle assembly, and the drive axle assembly includes a hub mechanism, a drive mechanism, and a brake mechanism;

The hub mechanism is connected to the drive mechanism, and the brake mechanism is movably connected to the drive mechanism. The brake mechanism is configured to brake the drive mechanism, thereby achieving braking of the hub mechanism.

In an embodiment, the drive mechanism includes an output shaft, and the brake mechanism is movably connected to the end of the output shaft remote from the hub mechanism.

In an embodiment, the output shaft incorporates an output gear, and the hub mechanism includes a first gear and a planetary gear structure.

The first gear meshes with the output gear, and the planetary gear structure is connected to the first gear.

In an embodiment, the planetary gear structure includes a sun gear, a planetary gear, and a planet carrier.

The sun gear meshes with the first gear, the planetary gear meshes with the sun gear, the planet carrier is connected to the planetary gear, and the planet carrier is configured to connect to a wheel.

In an embodiment, the planetary gear structure further includes a support shaft, the support shaft is connected to the planet carrier, and the support shaft passes through the planetary gear to support the planetary gear.

In an embodiment, the hub mechanism further includes a hub housing and a support bearing.

The hub housing covers the planet carrier, and the support bearing is connected between the hub housing and the planet carrier.

In an embodiment, the support bearing includes a first bearing and a second bearing, and the first bearing and the second bearing are symmetrically arranged on two sides of the hub housing.

In an embodiment, the drive axle assembly further includes an oil seal, and the oil seal is connected between the hub housing and the planet carrier.

In an embodiment, a ring gear structure is formed on the inner side of the hub housing, and the ring gear structure meshes with the planetary gear.

In an embodiment, the brake mechanism includes a piston assembly and a friction pair.

The friction pair is movably connected to the output shaft, and the piston assembly is movably connected to the friction pair.

In an embodiment, the piston assembly includes a service brake piston and a parking brake piston.

The service brake piston is movably connected to the friction pair, and the parking brake piston is movably connected to the service brake piston.

In an embodiment, the brake mechanism further includes a brake housing, and both the service brake piston and the parking brake piston are arranged in the brake housing.

The brake housing is provided with a partition, the partition is arranged between the service brake piston and the parking brake piston, a first oil injection gap is formed between the service brake piston and the partition, and a second oil injection gap is formed between the parking brake piston and the partition.

In an embodiment, the friction pair includes a friction seat, a friction plate, and a connecting plate.

The friction seat is movably connected to the output shaft, the friction plate is connected to the friction seat, the connecting plate is movably connected to the friction plate, and the service brake piston is movably connected to the connecting plate.

In an embodiment, the friction pair further includes an elastic member, and the elastic member abuts between the friction plate and the connecting plate to movably connect the connecting plate to the friction plate.

In an embodiment, the drive axle assembly further includes a mounting bracket, the drive mechanism includes a drive housing, the mounting bracket is connected to the drive housing, and the mounting bracket is configured to connect to a frame.

In an embodiment, the drive axle assembly further includes a connecting plate, the brake mechanism includes a first brake and a second brake, the drive mechanism includes a first drive unit and a second drive unit, and the hub mechanism includes a first hub and a second hub.

The first brake and the second brake are respectively connected to the connecting plate, the first drive unit is movably connected to the first brake, the first hub is connected to the first drive unit, the second drive unit is movably connected to the second brake, and the second hub is connected to the second drive unit.

In a second aspect, embodiments of the present application propose a vehicle, and the vehicle includes the drive axle assembly according to the first aspect.

In an embodiment of the present application, the drive axle assembly includes a hub mechanism, a drive mechanism, and a brake mechanism. The hub mechanism is connected to the drive mechanism, the brake mechanism is movably connected to the drive mechanism, and the brake mechanism is configured to brake the drive mechanism to achieve braking of the hub mechanism. In this way, the brake mechanism directly brakes the drive mechanism, and the drive mechanism has a large transmission ratio, which enables the braking torque of the brake mechanism to act on the hub mechanism through the amplification effect of the total transmission ratio of the drive mechanism in the entire transmission chain, reducing the torque required for braking the hub mechanism, thereby reducing the number of friction pairs arranged in the drive mechanism, increasing the arrangement space of the drive shaft in the drive unit, and improving the output power of the drive axle assembly. It is unnecessary for the brake mechanism to decelerate and brake the hub mechanism through the planetary gear structure, avoiding the need to arrange multiple friction pairs in the drive unit to overcome the torque of the hub mechanism due to the small transmission ratio of the planetary gear structure, and also avoiding the limitation on the output power of the drive axle assembly caused by the large arrangement space of the drive shaft in the drive mechanism.

Additional aspects and advantages of the present application will be partially set forth in the following description, and partially will become apparent from the following description, or may be learned through practice of the present application.

### BRIEF DESCRIPTION OF THE DRAWINGS

The above and/or additional aspects and advantages of the present application will become apparent and readily understandable from the description of the embodiments in conjunction with the following drawings, in which:
FIG. 1 is a schematic structural view of a drive axle assembly according to an embodiment of the present application;
FIG. 2 is one front view of a drive axle assembly according to an embodiment of the present application;
FIG. 3 is another front view of a drive axle assembly according to an embodiment of the present application;
FIG. 4 is a side view of a drive axle assembly according to an embodiment of the present application;
FIG. 5 is one partial schematic structural view of a drive axle assembly according to an embodiment of the present application;
FIG. 6 is a cross-sectional view of the structure shown in FIG. 5;
FIG. 7 is an enlarged structural schematic view of part M in FIG. 6;
FIG. 8 is a sectional view taken along line A-A of FIG. 6;
FIG. 9 is another partial schematic structural view of a drive axle assembly according to an embodiment of the present application.

Reference Numerals in Drawings: 10 - drive axle assembly; 100 - brake mechanism; 101 - first brake; 102 - second brake; 103 - breather; 104 - oil filling port; 105 - service brake oil port; 106 - parking brake oil port; 107 - piston assembly; 110 - service brake piston; 120 - parking brake piston; 130 - brake housing; 131 - partition; 132 - first oil injection gap; 133 - second oil injection gap; 140 - friction pair; 141 - friction seat; 142 - friction plate; 143 - connecting plate; 144 - elastic member; 200 - drive mechanism; 201 - first drive unit; 202 - second drive unit; 210 - output shaft; 211 - output gear; 220 - drive housing; 221 - mounting bracket; 300 - hub mechanism; 301 - first hub; 302 - second hub; 310 - first gear; 315 - planetary gear structure; 320 - sun gear; 330 - planetary gear; 340 - planet carrier; 350 - support shaft; 360 - hub housing; 370 - support bearing; 371 - first bearing; 372 - second bearing; 380 - oil seal; 400 - connecting plate; 401 - first support plate; 402 - second support plate.

### DETAILED DESCRIPTION

Embodiments of the present application will be described in detail below. Examples of the embodiments are shown in the accompanying drawings, wherein identical or similar reference numerals represent identical or similar elements or elements with identical or similar functions throughout. The embodiments described below with reference to the accompanying drawings are exemplary and are only used to explain the present application, and shall not be construed as a limitation on the present application. All embodiments obtained by those of ordinary skill in the art based on the embodiments of the present application without creative work fall within the scope of protection of the present application.

The features of the terms "first" and "second" in the description and claims of the present application may explicitly or implicitly include one or more of such features. In the description of the present application, unless otherwise stated, the term "plurality" means two or more. In addition, "and/or" in the description and claims indicates at least one of the connected objects, and the character "/" generally indicates that the associated objects before and after are in an "or" relationship.

In the description of the present application, it should be understood that the orientation or positional relationship indicated by the terms such as "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential" is based on the orientation or positional relationship shown in the accompanying drawings. This is only for the convenience of describing the present application and simplifying the description, and does not indicate or imply that the referred device or element must have a specific orientation, be constructed and operated in a specific orientation, and therefore shall not be construed as a limitation on the present application.

In the description of the present application, it should be noted that, unless otherwise explicitly specified and limited, the terms "installation", "connection" and "coupling" should be understood in a broad sense. For example, it may be a fixed connection, a detachable connection, or an integral connection; it may be a mechanical connection or an electrical connection; it may be a direct connection or an indirect connection through an intermediate medium, and it may be the communication between the interiors of two elements. For those of ordinary skill in the art, the specific meaning of the above terms in the present application can be understood in specific situations.

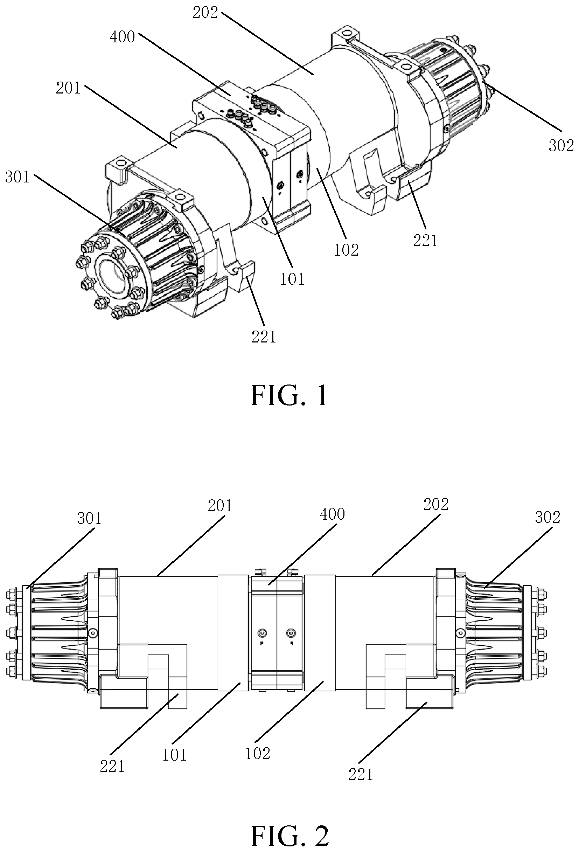

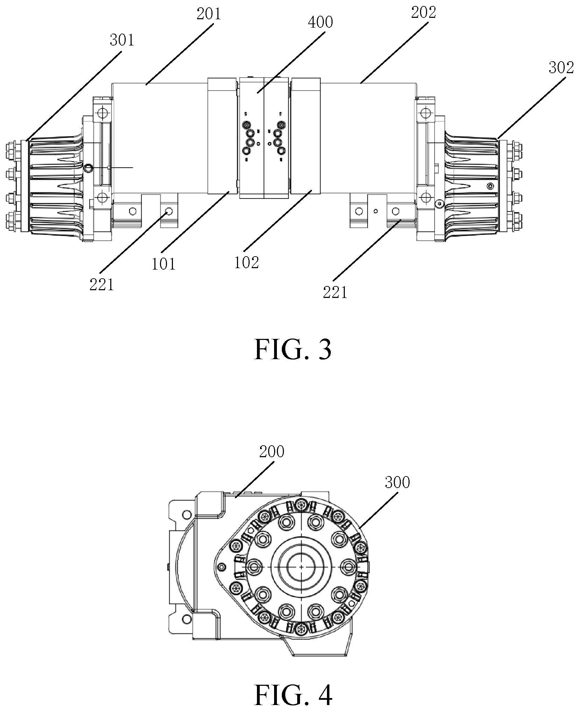

With reference to FIGs. 1 to 9, a drive axle assembly 10 according to an embodiment of the present application specifically includes a hub mechanism 300, a drive mechanism 200, and a brake mechanism 100.

The hub mechanism 300 is connected to the drive mechanism 200. The brake mechanism 100 is movably connected to the drive mechanism 200. The brake mechanism 100 is configured to brake the drive mechanism 200 to achieve braking of the hub mechanism 300.

In an embodiment of the present application, the brake mechanism 100 directly applies a braking action to the drive mechanism 200. The drive mechanism 200 has a large transmission ratio, which enables the braking torque of the brake mechanism 100 to act on the hub mechanism 300 through the amplification effect of the total transmission ratio of the drive mechanism 200 in the entire transmission chain, reducing the torque required for braking the hub mechanism 300, thereby reducing the number of friction pairs arranged in the drive mechanism 200, increasing the arrangement space of the drive shaft in the drive unit, and improving the output power of the drive axle assembly 10. The technical solution of the present application eliminates the need for the brake mechanism 100 to decelerate and brake the hub mechanism 300 through the planetary gear structure, avoiding the need to arrange multiple friction pairs in the drive unit to overcome the torque of the hub mechanism 300 due to the small transmission ratio of the planetary gear structure, and also avoiding the limitation on the output power of the drive axle assembly 10 caused by the large arrangement space of the drive shaft in the drive mechanism 200.

In an example, in an embodiment of the present application, the drive axle assembly 10 may be a dual-motor drive axle assembly, including a left drive axle and a right drive axle. The left drive axle and the right drive axle are symmetrically arranged and have a large driving power. Since the left drive axle and the right drive axle can be driven by two motors respectively, the left hub mechanism 300 and the right hub mechanism 300 can rotate in opposite directions when the turning radius is small. Alternatively, the drive axle assembly 10 may also be a single-motor drive axle assembly. The embodiment of the present application does not limit the specific type of the drive axle assembly 10.

In an embodiment of the present application, for example, the drive mechanism 200 may be a drive motor, a drive motor, or the like, which can output a rotational driving force and supply a relatively reliable power source. The motor may be an air-cooled motor, a water-cooled motor, a DC motor, an AC asynchronous motor, a permanent magnet synchronous motor, or the like. The embodiment of the present application does not limit the specific type of the drive mechanism 200.

In an embodiment of the present application, specifically, the hub mechanism 300 is configured to connect to a wheel to drive the wheel to rotate, decelerate, stop rotating, or the like. For example, the brake mechanism 100 may implement wet braking through structures such as pistons, which is relatively reliable and has better control accuracy.

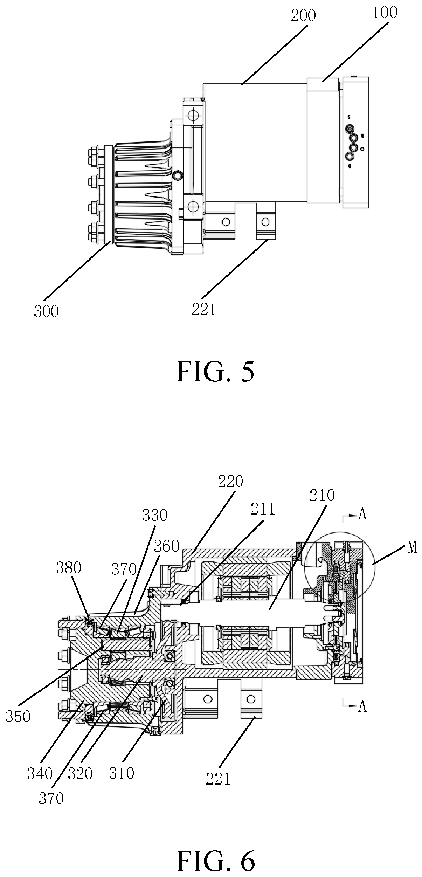

Optionally, in an embodiment of the present application, the drive mechanism 200 includes an output shaft 210 (see FIG. 6), and the brake mechanism 100 is movably connected to the end of the output shaft 210 remote from the hub mechanism 300. In this way, all components of the brake mechanism 100 can be conveniently mounted at one end of the drive mechanism 200, avoiding interference between the brake mechanism 100 and the hub mechanism 300 caused by arranging the brake mechanism 100 at the end of the output shaft 210 close to the hub mechanism 300, and enabling the brake mechanism 100 to achieve a satisfactory braking effect on the output shaft 210 of the drive mechanism 200.

In an embodiment of the present application, optionally, the output shaft 210 incorporates an output gear 211. The hub mechanism 300 includes a first gear 310 and a planetary gear structure 315. The first gear 310 meshes with the output gear 211, and the planetary gear structure 315 is connected to the first gear 310. In this way, the meshing between the first gear 310 and the output gear 211 achieves a reliable connection, high transmission efficiency, and stable transmission effect between the hub mechanism 300 and the output shaft 210 of the drive mechanism 200. Moreover, the connection between the planetary gear structure 315 and the first gear 310 enables the output shaft 210 of the drive mechanism 200 to drive the planetary gear structure 315 for reliable operation via the first gear 310.

Optionally, in an embodiment of the present application, the planetary gear structure 315 includes a sun gear 320, a planetary gear 330, and a planet carrier 340. The sun gear 320 meshes with the first gear 310, the planetary gear 330 meshes with the sun gear 320, the planet carrier 340 is connected to the planetary gear 330, and the planet carrier 340 is configured to connect to a wheel. In this way, the sun gear 320 achieves a reliable connection, high transmission efficiency, and stable transmission effect between the planetary gear structure 315 and the first gear 310, and drives the planetary gear 330 to rotate, enabling stable movement of the planetary gear 330 within the planet carrier 340.

Furthermore, since the planet carrier 340 is configured to connect to a wheel, that is, the planet carrier 340 in the embodiment of the present application also serves as a hub axle, the planet carrier 340 and the hub axle are integrated into a single component, which not only connects the planetary gear 330 but also connects to the wheel. This design reduces the number of components, provides better integrity and structural strength, and helps improve the space utilization of the drive axle assembly. Meanwhile, it avoids the conventional arrangement in the related art where the planet carrier 340 and the hub axle are configured as two separate structures connected by splines, thereby eliminating the risk of spline failure.

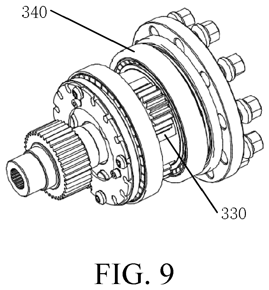

In an embodiment of the present application, as shown in FIG. 9, for example, the planet carrier 340 may be formed with an opening, and at least part of the planetary gear 330 is exposed through the opening to prevent the planet carrier 340 from interfering with the rotation of the planetary gear 330. In addition, during operation of the drive axle assembly 10, the planetary gear 330 generates splashing lubricating oil, and the opening on the planet carrier 340 can block the splashing lubricating oil, thereby prolonging the service life of the planetary gear structure 315.

For example, in an embodiment of the present application, the number of planetary gears 330 may be three, four, five, or the like. The number can be configured according to actual needs based on the vehicle type, size, transmission requirements, and the like. The embodiment of the present application does not limit the specific number of planetary gears 330.

For example, in an embodiment of the present application, the sun gear 320 and the output shaft 210 of the drive mechanism 200 may be arranged non-coaxially to adapt to the specific structures of different vehicle models. Alternatively, the sun gear 320 and the output shaft 210 of the drive mechanism 200 may be arranged coaxially, occupying a small space and improving the space utilization of the drive axle assembly 10. The embodiment of the present application does not limit the specific arrangement manner between the sun gear 320 of the planetary gear structure and the output shaft 210 of the drive mechanism 200.

Optionally, in an embodiment of the present application, the planetary gear structure 315 further includes a support shaft 350. The support shaft 350 is connected to the planet carrier 340 and passes through the planetary gear 330 to support the planetary gear 330. In this way, the support shaft 350 provides stable and reliable support for the planetary gear 330. Specifically, the planet carrier 340 is formed with openings on both sides of the opening corresponding to the planetary gear 330, and the support shaft 350 passes through the axis of the planetary gear 330 and is connected to the openings of the planet carrier 340.

In an embodiment of the present application, optionally, the hub mechanism 300 further includes a hub housing 360 and a support bearing 370. The hub housing 360 covers the planet carrier 340. The support bearing 370 is connected between the hub housing 360 and the planet carrier 340. In this way, the support bearing 370 enables stable and reliable connection between the hub housing 360 and the planet carrier 340, and allows the hub housing 360 to rotate stably and reliably relative to the planet carrier 340. Meanwhile, it avoids the conventional arrangement in the related art where the planet carrier 340 is configured as a cantilever-type planet carrier, eliminating the problem of poor load-bearing rigidity of the cantilever-type planet carrier, enabling the planet carrier 340 and the hub housing 360 to have strong rigid load-bearing performance, and further improving the transmission torque output by the drive mechanism 200. For example, the support bearing 370 may be a ball bearing or other types of bearings. The embodiment of the present application does not limit the specific type of the support bearing 370.

Optionally, in an embodiment of the present application, the support bearing 370 includes a first bearing 371 and a second bearing 372. The first bearing 371 and the second bearing 372 are symmetrically arranged on two sides of the hub housing 360. In this way, the first bearing 371 and the second bearing 372 act simultaneously at symmetrical positions on both sides of the hub housing 360, providing a more stable and firm support between the hub housing 360 and the planet carrier 340.

In an embodiment of the present application, optionally, the drive axle assembly 10 further includes an oil seal 380, and the oil seal 380 is connected between the hub housing 360 and the planet carrier 340. In this way, the oil seal 380 achieves a good sealing effect between the planet carrier 340 and the hub housing 360, preventing external impurities such as sewage and dust from entering the interior of the planetary gear structure 315 and affecting the normal operation of the planetary gear structure 315. For example, the oil seal 380 may be a cassette oil seal, which provides better protection against external impurities such as sewage and dust and improves the sealing effect.

Optionally, in an embodiment of the present application, a ring gear structure is formed on the inner side of the hub housing 360, and the ring gear structure meshes with the planetary gear 330. In this way, the ring gear structure achieves a stable and reliable connection between the hub housing 360 and the planetary gear 330, integrating the ring gear structure with the hub housing 360 and eliminating the need for a separate ring gear structure. Compared with the separately assembled ring gear structure adopted in the related art, this design overcomes the defects of the thin ring gear structure that is prone to cracking and the mounting part that is easily broken under shear force.

Specifically, in an embodiment of the present application, the drive mechanism 200 may consist of an output shaft 210 (drive shaft), a drive housing 220, a stator, a rotor, bearings, and the like. The left end of the drive mechanism 200 may be provided with a flange connected to the hub housing 360 of the hub mechanism 300. The output gear 211 of the output shaft 210 meshes with the first gear 310 and drives the sun gear 320 in the planetary gear structure 315 supported on the support shaft 350 to rotate. The sun gear 320 drives the planetary gear 330 to rotate on its own axis. Under the joint action of the ring gear structure on the inner side of the hub housing 360, the planetary gear 330 rotates on its own axis and drives the planet carrier 340 to revolve, and drives the wheel to rotate through fasteners (such as bolts) connected to the exterior of the planet carrier 340. The planet carrier 340 may be supported on both sides of the ring gear structure of the hub housing 360 via the first bearing 371 and the second bearing 372.

In an embodiment of the present application, optionally, the brake mechanism 100 includes a piston assembly 107 and a friction pair 140. The friction pair 140 is movably connected to the output shaft 210. The piston assembly 107 is movably connected to the friction pair 140. In this way, the piston assembly 107 drives the friction pair 140 to abut against the output shaft 210, thereby decelerating or braking the drive mechanism 200, or the friction pair 140 is disengaged from the output shaft 210, allowing the drive mechanism 200 to resume driving the hub mechanism 300.

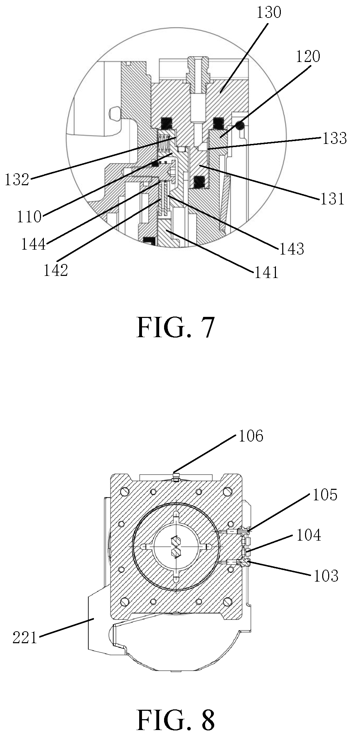

Optionally, as shown in FIG. 7, in an embodiment of the present application, the piston assembly 107 includes a service brake piston 110 and a parking brake piston 120. The service brake piston 110 is movably connected to the friction pair 140, and the parking brake piston 120 is movably connected to the service brake piston 110. In this way, the service brake piston 110 achieves braking of the friction pair 140 during driving, that is, the service brake piston 110 drives the friction pair 140 to abut against the output shaft 210, thereby decelerating or braking the drive mechanism 200 during driving. Alternatively, the service brake piston 110 drives the friction pair 140 to disengage from the output shaft 210, allowing the drive mechanism 200 to resume driving the hub mechanism 300. Moreover, under parking conditions, the parking brake piston 120 drives the service brake piston 110, so that the parking brake piston 120 drives the friction pair 140 to abut against the output shaft 210 via the service brake piston 110, thereby achieving parking braking of the vehicle. Alternatively, the parking brake piston 120 drives the friction pair 140 to disengage from the output shaft 210 via the service brake piston 110, thereby canceling the parking braking of the vehicle.

In an embodiment of the present application, optionally, the brake mechanism 100 further includes a brake housing 130. Both the service brake piston 110 and the parking brake piston 120 are arranged in the brake housing 130. The brake housing 130 is formed with a partition 131, and the partition 131 is arranged between the service brake piston 110 and the parking brake piston 120. A first oil injection gap 132 is formed between the service brake piston 110 and the partition 131. A second oil injection gap 133 is formed between the parking brake piston 120 and the partition 131. In this way, injecting or discharging oil into or from the first oil injection gap 132 achieves movement of the service brake piston 110, and injecting or discharging oil into or from the second oil injection gap 133 achieves movement of the parking brake piston 120.

Specifically, in an embodiment of the present application, as shown in FIG. 7, injecting oil into the first oil injection gap 132 causes the service brake piston 110 to move leftward, thereby driving the friction pair 140 to abut against the output shaft 210 and achieving the service brake function. Moreover, discharging oil from the second oil injection gap 133 causes the parking brake piston 120 to move leftward, and the parking brake piston 120 drives the service brake piston 110 to move leftward, thereby achieving the parking brake function.

Optionally, in an embodiment of the present application, the friction pair 140 includes a friction seat 141, a friction plate 142, and a connecting plate 143. The friction seat 141 is movably connected to the output shaft 210. The friction plate 142 is connected to the friction seat 141. The connecting plate 143 is movably connected to the friction plate 142. The service brake piston 110 is movably connected to the connecting plate 143. In this way, the connecting plate 143 achieves a movable connection between the friction pair 140 and the service brake piston 110, the friction plate 142 provides friction force to overcome torque, and the friction seat 141 achieves a movable connection between the friction pair 140 and the output shaft 210. Thus, the friction pair 140 has a stable and reliable effect to overcome the torque required for braking and features a compact structure.

For example, in an embodiment of the present application, the number of friction plates 142 may be two, three, four, or the like, and can be configured according to actual needs. The embodiment of the present application does not limit the specific number of friction plates 142. Similarly, the number of connecting plates 143 may be two, three, four, or the like, and can be configured according to actual needs. The embodiment of the present application does not limit the specific number of connecting plates 143. For example, the connecting plate 143 may be a steel sheet with good rigidity, or the connecting plate 143 may be made of other materials. The embodiment of the present application does not limit the specific material of the connecting plate 143.

In an embodiment of the present application, optionally, the friction pair 140 further includes an elastic member 144, and the elastic member 144 abuts between the friction plate 142 and the connecting plate 143 to movably connect the connecting plate 143 to the friction plate 142. In this way, the elastic deformation of the elastic member 144 provides a reliable movable connection for the friction plate 142 and the connecting plate 143. For example, the elastic member 144 may be a spring, a spring plate, or the like. The embodiment of the present application does not limit the specific type of the elastic member 144.

Specifically, in an embodiment of the present application, as shown in FIG. 6, the friction plate 142 may be connected to the right side of the drive housing 220. The friction plate 142 is formed with an internal spline. The friction seat 141 is formed with an external spline, and the internal spline of the friction plate 142 matches the external spline of the friction seat 141. The connecting plate 143 may be connected to the outer side of the friction plate 142, that is, the side of the friction plate 142 remote from the drive mechanism 200. A plurality of open slots may be uniformly distributed on the outer circle of the connecting plate 143, and the notches of the open slots cooperate with a plurality of fasteners (such as screws or bolts) fixed on the drive housing 220. Springs sleeved on the respective fasteners are arranged between the plurality of connecting plates 143.

As shown in FIGs. 6 and 7, the service brake piston 110 may be arranged on the right side of the connecting plate 143. A plurality of return springs 108 may be uniformly distributed on the service brake piston 110 to achieve reset of the service brake piston 110. The brake housing 130 may be formed with a stepped hole, and the service brake piston 110 may be mounted in the stepped hole of the brake housing 130 and form a first oil injection gap 132 via two sets of oil seal rings. The parking brake piston 120 may be arranged on the right side of the service brake piston 110, and the service brake piston 110 also forms a second oil injection gap 133 between the two sets of seal rings and the partition 131 of the brake housing 130. For example, a disc spring, the brake housing 130, and a circlip for hole may be arranged on the right side of the service brake piston 110. During assembly, a press machine is used to compress the brake housing 130, and the circlip for hole is installed after the disc spring is compressed, so that the disc spring is always in a compressed state. Under the action of the disc spring, the parking brake piston 120 may push the service brake piston 110 to press the connecting plates 143 and the friction plates 142. Under the action of friction force, the friction plates 142 and the friction seat 141 press the output shaft 210 to prevent rotation, and the drive axle assembly 10 is in a parking brake state.

As shown in FIG. 7, when the parking brake needs to be released, the parking release switch may be pressed, so that the hydraulic system of the vehicle supplies pressure oil injected from the oil port into the second oil injection gap 133 on the left side of the parking brake piston 120. When the pressure of the pressure oil is sufficient, the parking brake piston 120 moves rightward and compresses the disc spring, disengaging the parking brake piston 120 from the service brake piston 110. At this time, the service brake piston 110 also moves rightward under the action of the return spring 108 and releases the connecting plate 143. In this way, the connecting plates 143 and the friction plates 142 maintain clearances under the action of multiple springs, the output shaft 210 can resume free rotation, and the drive axle assembly 10 achieves parking brake release, allowing the vehicle to travel.

When the vehicle needs to perform service braking during driving, the brake pedal of the vehicle may be depressed, so that the brake fluid in the brake master cylinder of the vehicle is injected into the first oil injection gap 132 through the service brake oil port 105 (see FIG. 8). The service brake piston 110 moves leftward to bring the connecting plates 143 and the friction plates 142 into contact and press tightly, achieving deceleration and service braking of the vehicle. When the vehicle needs parking braking, the parking release switch is closed, the parking brake oil port 106 is connected to the oil tank, the oil at the second oil injection gap 133 is discharged under the action of the disc spring, and the parking brake piston 120 moves leftward and pushes the service brake piston 110 to press the connecting plates 143 and the friction plates 142, thereby achieving parking braking. The brake mechanism 100 is equipped with an oil filling port 104, a breather 103, an oil drain plug, and the like, making the entire drive axle assembly 10 safe and reliable, compact in structure, and complete in functions.

Optionally, in an embodiment of the present application, the drive axle assembly 10 further includes a mounting bracket 221. The drive mechanism 200 includes a drive housing 220, the mounting bracket 221 is connected to the drive housing 220, and the mounting bracket 221 is configured to connect to a frame. In this way, the connection between the drive axle assembly 10 and the frame is achieved via the mounting bracket 221. Compared with the solution in the existing related art where a mounting plate is arranged on the frame, a mounting cavity is formed on the mounting plate, and the drive axle assembly is embedded in the mounting cavity, which results in a large front overhang of the vehicle, reduces the load capacity of the vehicle, limits the mast width of the vehicle, and restricts the driving vision of the vehicle. In the embodiment of the present application, the connection with the frame is achieved via the mounting bracket 221, eliminating the need for a mounting plate with a mounting cavity, reducing the front overhang of the vehicle, improving the load capacity of the vehicle, widening the mast width of the vehicle, expanding the driving vision of the vehicle, and enhancing driving convenience.

Optionally, the drive axle assembly 10 further includes a connecting plate 400. The brake mechanism 100 includes a first brake 101 and a second brake 102. The drive mechanism 200 includes a first drive unit 201 and a second drive unit 202. The hub mechanism 300 includes a first hub 301 and a second hub 302. The first brake 101 and the second brake 102 are respectively connected to the connecting plate 400. The first drive unit 201 is movably connected to the first brake 101. The first hub 301 is connected to the first drive unit 201. The second drive unit 202 is movably connected to the second brake 102. The second hub 302 is connected to the second drive unit 202. In this way, the connection between the first brake 101 and the second brake 102 is achieved via the connecting plate 400, and the first drive unit 201, the first hub 301, the second drive unit 202, and the second hub 302 are arranged in sequence, realizing a dual-motor drive axle structure with good overall structural performance, enabling the drive axle assembly 10 to bear a high load and have a large output power.

For example, as shown in FIGs. 1 to 3, in an embodiment of the present application, the connecting plate 400 may include a first support plate 401 and a second support plate 402. One side of the first support plate 401 is connected to the first brake 101, and the other side of the first support plate 401 is connected to the second support plate 402. The side of the second support plate 402 remote from the first support plate 401 is connected to the second brake 102. A stable connection between the first support plate 401 and the second support plate 402 may be achieved via fasteners through shaft-hole fit, such as bolts, studs, screws, or the like, providing a reliable and stable connection effect, and enabling the drive axle assembly 10 to have good structural integrity and bear a high load.

In summary, the drive axle assembly according to the embodiment of the present application has at least the following advantages:

In an embodiment of the present application, the drive axle assembly includes a hub mechanism, a drive mechanism, and a brake mechanism. The hub mechanism is connected to the drive mechanism, the brake mechanism is movably connected to the drive mechanism, and the brake mechanism is configured to brake the drive mechanism to achieve braking of the hub mechanism. In this way, the brake mechanism directly applies a braking action to the drive mechanism, and the drive mechanism has a large transmission ratio, which enables the braking torque of the brake mechanism to act on the hub mechanism through the amplification effect of the total transmission ratio of the drive mechanism in the entire transmission chain, reducing the torque required for braking the hub mechanism, thereby reducing the number of friction pairs arranged in the drive mechanism, increasing the arrangement space of the drive shaft in the drive unit, and improving the output power of the drive axle assembly. It is unnecessary for the brake mechanism to decelerate and brake the hub mechanism through the planetary gear structure, avoiding the need to arrange multiple friction pairs in the drive unit to overcome the torque of the hub mechanism due to the small transmission ratio of the planetary gear structure, and also avoiding the limitation on the output power of the drive axle assembly caused by the large arrangement space of the drive shaft in the drive mechanism.

In a second aspect, the present application proposes a vehicle. In specific embodiments, the vehicle includes the drive axle assembly 10 described above. Specifically, the vehicle includes a frame, the drive axle assembly 10 is connected to the frame, and the frame provides stable and reliable support for the drive axle assembly 10.

For example, in embodiments of the present application, the vehicle may be a forklift, such as a side forklift, a side stacking forklift, a straddle forklift, or the like. The embodiment of the present application does not limit the specific type of the vehicle.

The vehicle according to the embodiment of the present application has at least the following advantages:

In an embodiment of the present application, the vehicle includes the drive axle assembly. The drive axle assembly includes a hub mechanism, a drive mechanism, and a brake mechanism. The hub mechanism is connected to the drive mechanism, the brake mechanism is movably connected to the drive mechanism, and the brake mechanism is configured to brake the drive mechanism to achieve braking of the hub mechanism. In this way, the brake mechanism directly applies a braking action to the drive mechanism, and the drive mechanism has a large transmission ratio, which enables the braking torque of the brake mechanism to act on the hub mechanism through the amplification effect of the total transmission ratio of the drive mechanism in the entire transmission chain, reducing the torque required for braking the hub mechanism, thereby reducing the number of friction pairs arranged in the drive mechanism, increasing the arrangement space of the drive shaft in the drive unit, and improving the output power of the drive axle assembly. It is unnecessary for the brake mechanism to decelerate and brake the hub mechanism through the planetary gear structure, avoiding the need to arrange multiple friction pairs in the drive unit to overcome the torque of the hub mechanism due to the small transmission ratio of the planetary gear structure, and also avoiding the limitation on the output power of the drive axle assembly caused by the large arrangement space of the drive shaft in the drive mechanism.

In the description of this specification, descriptions with reference to the terms "one embodiment", "some embodiments", "exemplary embodiments", "example", "specific example", or "some examples" mean that the specific features, structures, materials, or characteristics described in conjunction with the embodiment or example are included in at least one embodiment or example of the present application. In this specification, schematic expressions of the above terms do not necessarily refer to the same embodiment or example. Moreover, the specific features, structures, materials, or characteristics described may be combined in any suitable manner in any one or more embodiments or examples.

Although embodiments of the present application have been shown and described, those of ordinary skill in the art can understand that various changes, modifications, substitutions, and variations can be made to these embodiments without departing from the principles and spirit of the present application, and the scope of the present application is defined by the claims and their equivalents.

## Claims

1. A drive axle assembly (10), comprising:
a drive mechanism (200);
a hub mechanism (300), the hub mechanism being connected to the drive mechanism; and
a brake mechanism (100), the brake mechanism being movably connected to the drive mechanism, the brake mechanism being configured to brake the drive mechanism for achieving braking of the hub mechanism.

2. The drive axle assembly (10) according to claim 1, wherein the drive mechanism comprises an output shaft (210), and the brake mechanism is movably connected to the end of the output shaft remote to the hub mechanism.

3. The drive axle assembly (10) according to claim 2, wherein the output shaft is formed with an output gear (211), the hub mechanism comprises a first gear (310) and a planetary gear structure (315);
the first gear meshes with the output gear, and the planetary gear structure is connected to the first gear.

4. The drive axle assembly (10) according to claim 3, wherein the planetary gear structure comprises:
a sun gear (320), meshing with the first gear;
a planetary gear (330), meshing with the sun gear; and
a planet carrier (340), being connected to the planetary gear, and being configured to connect to a wheel.

5. The drive axle assembly (10) according to claim 4, wherein the planetary gear structure further comprises a support shaft (350), the support shaft is connected to the planet carrier, and the support shaft passes through the planetary gear to support the planetary gear.

6. The drive axle assembly (10) according to claim 4 or 5, wherein the hub mechanism further comprises:
a hub housing (360), enclosing the planet carrier; and
a support bearing (370), being connected between the hub housing and the planet carrier.

7. The drive axle assembly (10) according to claim 6, wherein the support bearing comprises a first bearing (371) and a second bearing (372), the first bearing and the second bearing are symmetrically arranged on two sides of the hub housing.

8. The drive axle assembly (10) according to claim 6 or 7, wherein the drive axle assembly further comprises an oil seal (380), the oil seal is connected between the hub housing and the planet carrier.

9. The drive axle assembly (10) according to any one of claims 4 to 8, wherein a ring gear structure is formed on an inner side of the hub housing, the ring gear structure meshing with the planetary gear.

10. The drive axle assembly (10) according to any one of claims 2 to 9, wherein the brake mechanism comprises:
a friction pair (140), being movably connected to the output shaft; and
a piston assembly (107), being movably connected to the friction pair.

11. The drive axle assembly (10) according to claim 10, wherein the piston assembly comprises:
a service brake piston (110), being movably connected to the friction pair; and
a parking brake piston (120), being movably connected to the service brake piston.

12. The drive axle assembly (10) according to claim 11, wherein the brake mechanism further comprises a brake housing (130), the service brake piston and the parking brake piston are both disposed in the brake housing;
the brake housing is formed with a partition (131), the partition is disposed between the service brake piston and the parking brake piston, a first oil filling gap (132) is formed between the service brake piston and the partition, and a second oil filling gap (133) is formed between the parking brake piston and the partition.

13. The drive axle assembly (10) according to any one of claims 10 to 12, wherein the friction pair comprises:
a friction seat (141), being movably connected to the output shaft;
a friction plate (142), being connected to the friction seat; and
a connecting plate (143), being movably connected to the friction plate, and the service brake piston being movably connected to the connecting plate.

14. The drive axle assembly (10) according to claim 13, wherein the friction pair further comprises an elastic member (144), the elastic member abuts between the friction plate and the connecting plate to movably connect the connecting plate to the friction plate.

15. The drive axle assembly (10) according to claim 13 or 14, wherein the drive axle assembly further comprises a mounting bracket (221), the drive mechanism comprises a drive housing (220), the mounting bracket is connected to the drive housing, and the mounting bracket is configured to connect to a vehicle frame.

16. The drive axle assembly (10) according to any one of claims 1 to 15, wherein the drive axle assembly further comprises a connecting plate (400), the brake mechanism comprises a first brake (101) and a second brake (102), the drive mechanism comprises a first driver (201) and a second driver (202), the hub mechanism comprises a first hub (301) and a second hub (302);
the first brake and the second brake are respectively connected to the connecting plate, the first driver is movably connected to the first brake, the first hub is connected to the first driver, the second driver is movably connected to the second brake, and the second hub is connected to the second driver.

17. A vehicle, comprising the drive axle assembly (10) according to any one of claims 1 to 16.
